Europäisches Patentamt

European Patent Office

Office européen des brevets

(11) Veröffentlichungsnummer : **0 149 745**
B1

# EUROPÄISCHE PATENTSCHRIFT

(45) Veröffentlichungstag der Patentschrift :
17.08.88

(21) Anmeldenummer : 84113720.1

(22) Anmeldetag : 14.11.84

(51) Int. Cl.⁴ : **G 01 B 17/00**

(54) **Ultraschall-Wegmesser.**

(30) Priorität : 30.11.83 DE 3343310

(43) Veröffentlichungstag der Anmeldung :
31.07.85 Patentblatt 85/31

(45) Bekanntmachung des Hinweises auf die Patenterteilung : 17.08.88 Patentblatt 88/33

(84) Benannte Vertragsstaaten :
CH DE FR GB IT LI

(56) Entgegenhaltungen :
EP-A- 0 024 495
DE-A- 3 131 455
DE-B- 2 833 369
US-A- 3 898 555

(73) Patentinhaber : Gebhard Balluff Fabrik feinmechanischer Erzeugnisse GmbH & Co.
Gartenstrasse 21
D-7303 Neuhausen a.d.F. (DE)

(72) Erfinder : Vinnemann, Antonius, Dr.
Am Bopserweg 11
D-7000 Stuttgart 1 (DE)
Erfinder : Köninger, Veit
Schlosserstrasse 55
D-7303 Neuhausen (DE)

(74) Vertreter : Hoeger, Stellrecht & Partner
Uhlandstrasse 14c
D-7000 Stuttgart 1 (DE)

## Beschreibung

Die Erfindung betrifft einen Ultraschall-Wegmesser zur linearen Wegmessung mit einem Rohr aus magneto-striktivem Material, mit einem bezüglich des Rohres beweglichen Magneten zur Erzeugung von als Positionssignale dienenden Ultraschall-Torisonsimpulsen in Abhängigkeit von längs des Rohres entlanglaufenden elektrischen Impulsen aus einem Impulsgenerator und mit einem an das Rohr angekoppelten Ultraschall Aufnehmer zum Umsetzen von in dem Rohr erzeugten Ultraschallimpulsen in elektrische Signale und mit einer Meßschaltung zur Ermittlung der Position des beweglichen Magneten in Abhängigkeit vom zeitlichen Abstand zwischen den aus den Positionssignalen erhaltenen Signalen und jeweils mindestens einem in Abhängigkeit vom Auftreten eines elektrischen Impulses erzeugten Bezugssignal.

Ein derartiger Ultraschall-Wegmesser ist aus der US-PS 3 898 555 bekannt. Bei dem bekannten Wegmesser läuft durch das Innere des Rohres aus magneto-striktivem Material ein elektrischer Leiter, welchem elektrische Impulse vom Ausgang eines Impulsgenerators zugeführt werden. Diese elektrischen Impulse lösen an der Stelle des Rohres, an der sich der Magnet zur Erzeugung der Positionssignale befindet, jeweils einen Ultraschall-impuls aus, der aus einem Torsionswellen umfassenden Wellenpaket besteht, welches seinerseits von einem Wandler erfasst und in ein elektrisches Signal umgesetzt wird, dessen zeitlicher Abstand von einem Bezugssignal der Lage des beweglichen Magneten entspricht, wobei bei dem bekannten Wegmesser als Bezugssignale unmittelbar von den elektrischen Impulsen abgeleitete elektrische Signale verwendet werden. Der bekannte Wegmesser arbeitet dabei mit einem Ultraschall-Aufnehmer, welcher zwei Streifen aus magneto-striktivem Material aufweist, die tangential am Umfang des Rohres aus magneto-striktivem Material befestigt und die von Wandlerspulen umgeben sind. Durch diese Streifen werden zunächst die Torsionswellen des Rohres in Longitudinalwellen umgewandelt, da nur Longitudinalwellen mit Spulen direkt in ein elektrisches Signal umsetzbar sind, und anschliessend wird in der Spule ein elektrisches Ausgangssignal induziert.

Ein ähnlicher Ultraschall-Wegmesser, bei dem die Bezugssignale mit Hilfe eines in einem fest vorgegebenen Abstand von dem Wandler angeordneten weiteren, das Rohr umgebenden Magneten gewonnen werden, ist in der DE-OS 31 31 455 beschrieben. Auch dieser bekannte Ultraschall-Wegmesser arbeitet mit einem Ultraschall-Aufnehmer wie er vorstehend im Zusammenhang mit der US-PS 3 898 555 erläutert wurde. Der besondere Vorteil des Wegmessers gemäß DE-OS 31 31 455 besteht darin, daß temperaturabhängige Längen- und Laufzeitänderungen in dem Rohr aus magneto-striktivem Material dadurch kompensiert werden können, daß auch die Bezugssignale aus Ultraschallimpulsen gewonnen werden, die am Ort des feststehenden Bezugsmagneten erzeugt werden.

Eine verbesserte Ausführungsform des Wegmessers gemäß DE-OS 31 31 455 ist ferner in einer früheren Anmeldung der Anmelderin (amtliches Aktenzeichen P 33 04 520.8) beschrieben, gemäß welcher zwei in einem fest vorgegebenen Abstand voneinander angeordnete Bezugs- bzw. Referenzmagnete vorgesehen sind, mit deren Hilfe Ultraschallimpulse als Bezugssignale erzeugt werden, die so ausgewertet werden können, daß auch eine von der Temperatur oder der Alterung abhängige Drift der Parameter der Meßschaltung sehr weitgehend kompensiert werden kann. Auch der Wegmesser gemäß dieser früheren Anmeldung arbeitet wieder mit einem Ultraschall-Aufnehmer gemäß der US-PS 3 898 555.

Bei allen bisher bekannten Ultraschall-Aufnehmern für Torsionsimpulse wird ein auf dem magneto-striktiven Rohr ankommender Torsionsimpuls in einen Longitudinalimpuls auf den magneto-striktiven Bändchen umgewandelt und der Longitudinalimpuls induziert aufgrund des umgekehrten Magnetostriktionseffekts (Villari-Effekt) in den die Bändchen umgebenden Spulen elektrische Signale. Es hat sich gezeigt, dass bei den bekannten Ultraschall-Wegmessern mit den beschriebenen Ultraschall-Aufnehmern durch Reflexion der Ultraschallimpulse am benachbarten Rohrende, insbesondere bei Verwendung von drei Magneten, nämlich zwei Referenzmagneten und einem Positionsmagnet, zahlreiche Echos entstehen, die sich mehr oder weniger stark überlappen und damit eine exakte Signalauswertung erschweren. Weiterhin hat es sich gezeigt, daß die Vergrößerung des Abstands zwischen den Referenzmagneten und/oder eine Dämpfung des an den Ultraschallaufnehmer angrenzenden Rohrendes relativ teuer ist und einen deutlich erhöhten Platzbedarf mit sich bringt, der dem praktischen Einsatz von Ultraschall-Wegmessern der betrachteten Art entgegensteht.

Ausgehend vom Stand der Technik und der vorstehend aufgezeigten Problematik liegt der Erfindung die Aufgabe zugrunde, einen Ultraschall-Wegmesser der eingangs angegebenen Art dahingehend zu verbessern, daß eine besonders präzise Erfassung der Zeitintervalle zwischen den längs des Rohres entlanglaufenden Ultraschall-Impulsen ermöglicht wird.

Diese Aufgabe wird gemäß der Erfindung dadurch gelöst, dass als Ultraschall-Aufnehmer zum direkten Nachweis von Torsionsimpulsen ein aufgrund von Remanenzerscheinungen zirkular magnetisiertes Teilstück des Rohres und eine dieses in axialer Richtung umgebende Spule vorgesehen sind.

Die erfindungsgemäße Ausgestaltung eines Ultraschall-Wegmessers bzw. seines Ultraschall-Aufnehmers beruht auf folgenden Überlegungen:

Durch den Positionsmagneten und gegebenenfalls den bzw. die Referenzmagneten wird längs des magneto-striktiven Rohres ein longitudinales magnetisches Feld erzeugt. Dies bedeutet, daß sich in dem Rohr die magnetischen Dipole bzw. ihre Gruppen, die Weiss'schen Bezirke in Längsrichtung des Rohres ausrichten. Wenn nun ein elektrischer Impuls an dem Rohr entlang bzw. bei im Inneren des Rohres angeordneten elektrischen Leiter durch dieses hindurchläuft, dann überlagert sich das zirkulare Magnetfeld, welches durch den elektrischen (Strom-) Impuls erzeugt wird, mit dem longitudinalen Feld des an der betreffenden Stelle befindlichen Permanent-Magneten zu einem schraubenförmigen Feld. Die magnetischen Dipole bzw. die Weiss'schen Bezirke klappen folglich in diese neue Feldrichtung, wodurch nach dem Joule-Effekt (Magnetostriktion) eine Verformung des Materials in Schraubenrichtung erfolgt. Hierdurch entsteht ein Ultraschallimpuls mit einer tangentialen bzw. zirkularen und einer longitudinalen Komponente, der sich mit Schallgeschwindigkeit nach beiden Seiten ausbreitet. Diese Torsionswellen wurden bisher durch beispielsweise in der US-PS 3 898 555 beschriebene Ultraschall-Aufnehmer in longitudinale Wellen umgewandelt und erst diese konnten mittels einer Spule in elektrische Signale umgewandelt werden.

Der wesentliche Punkt der vorliegenden Erfindung besteht nun darin, diese Torsionswellen direkt mit einer das Rohr in axialer Richtung umgebenden Spule, d. h. ohne Modenwandlung, nachzuweisen. Dies war mit den bisher bekannten Anordnungen nicht möglich, da die Torsionswellen in einer axial ausgerichteten Spule kein detektierbares elektrisches Signal erzeugten.

Der Nachweis gelingt nur, wenn das Teilstück des Rohres, das von der Spule umgeben ist, vor Ankunft einer Torsionswelle zirkular magnetisiert wird. Diese zirkulare Magnetisierung führt zu keinem Signal in der axial ausgerichteten Spule.

Wenn nun ein Ultraschall-Impuls in Form eines Torsionsimpulses im Bereich der das Rohr umgebenden Spule des Ultraschall-Aufnehmers eine schraubenförmige mechanische Verformung des zirkular magnetisierten Rohres herbeiführt, dann werden einzelne Volumenelemente des Rohres verdreht und somit auch die darin enthaltenen magnetischen Dipole aus ihrer zirkularen Richtung herausgedreht, wodurch eine Feldänderung in Richtung der Spulenachse herbeigeführt wird, die dazu führt, dass in der Spule nach dem Induktionsgesetz ein elektrisches Signal induziert und folglich ein direkter Nachweis von Torsionswellen ohne Verwendung eines Modenwandlers möglich wird.

Bei dem erfindungsgemässen Ultraschall-Wegmesser wird nun die zirkulare Magnetisierung des Rohres dadurch erreicht, dass die Remanenz des magneto-striktiven Materials ausgenützt wird, d. h. vor Auftreffen einer Torsionsfront wird das magneto-striktive Rohr durch geeignete Massnahmen vormagnetisiert, wobei aufgrund von Remanenzerscheinungen nach Entfernen des Vormagnetisierungsfeldes eine zirkulare Magnetisierung erhalten bleibt, die bei Auftreffen der Torsionsfront, wie oben beschrieben, eine axiale Komponente erhält.

In Ausgestaltung der Erfindung hat es sich als vorteilhaft erwiesen, wenn Vormagnetisierungseinrichtungen vorgesehen sind, mit deren Hilfe in dem von der Spule umgebenen ersten Teilstück des Rohres vor jeder Messung mit Hilfe eines längs dieses Teilstücks entlanglaufenden Stromimpulses eine zirkulare Magnetisierung erzeugbar ist und wenn die Anschlüsse für den Impulsgenerator derart angeordnet sind, daß längs eines zweiten gegenüber dem ersten Teilstück versetzten Teilstücks des Rohres entlanglaufende elektrische Impulse erzeugbar sind.

Der besondere Vorteil der erfindungsgemäßen Trennung des von den Ausgangsimpulsen beaufschlagten Teilstücks des magneto-striktiven Rohres und des von der Spule umgebenen Teilstücks des Rohres, an welches zur Erzeugung der zirkularen Magnetisierung des magneto-striktiven Materials besondere elektrische Impulse angelegt werden, die als Auffrischimpulse bezeichnet werden, besteht darin, daß zum Zeitpunkt der Messung in die Spule keine Störsignale induziert werden, die durch einen Ausgangsimpuls des Impulsgenerators hervorgerufen werden. Dabei wird hinsichtlich der Entstehung von Störsignalen von folgenden Überlegungen ausgegangen: Auch ein kleines longitudinales Magnetfeld im Bereich der Spule des Ultraschall-Aufnehmers, beispielsweise das Streufeld eines benachbarten Referenzmagneten, magnetisiert das magneto-striktive Material des Rohres in einem entsprechenden Umfang. Wenn unter diesen Voraussetzungen ein elektrischer Impuls des Impuls-Generators längs des Röhrchens entlangläuft, dann führt dies analog zur Erzeugung des Meßsignals zu einem Umklappen bzw. zu einer Richtungsänderung der magnetischen Dipole. Da diese Änderung der Richtung des Magnetfeldes von der Spule des erfindungsgemäßen Ultraschall-Aufnehmers ohne die verlustbehafteten Mechanismen der Magnetostriktion bzw. des Villari-Effektes direkt erfasst wird, ist folglich die induzierte Störspannung unter Umständen um eine ganze Größenordnung höher als ein durch einen auszuwertenden Ultraschall-Impuls aufgrund des Villari-Effektes erzeugtes Nutzsignal. Die dadurch im Ultraschall-Aufnehmer erzeugten Schwingungen können folglich die genaue Messung der Positions- und der mit Hilfe von Referenzmagneten erzeugten Bezugssignale erheblich beeinträchtigen. Dieser Nachteil wird vermieden, wenn die bei einer Messung von dem Impulsgenerator erzeugten elektrischen Impulse nicht an dem Teilstück des magneto-striktiven Rohres entlangfließen, welches von der Spule umgeben wird, und wenn die zirkulare Magnetisierung in dem von der Spule umgebenen Teilstück mittels besonderer Auffrischimpulse zwischen den einzelnen Messungen erzeugt wird.

Was die Erzeugung der Bezugssignale anbelangt, so kann der erfindungsgemäße Ultraschall-Wegmesser, wie die früheren Systeme, mit einem oder mit zwei Referenzmagneten oder wie der Wegmesser gemäß US-PS 3 898 555 mit den Ausgangsimpulsen des Impulsgenerators selbst arbeiten. Die prinzipiellen Vorteile des erfindungsgemäßen Ultraschall-Aufnehmers werden hierdurch nicht beeinflusst. Vorteilhafte Ausgestaltungen der Erfindung sind Gegenstand von Unteransprüchen.

Weitere Einzelheiten und Vorteile der Erfindung werden nachstehend anhand von Zeichnungen noch näher erläutert.

Es zeigen :

Fig. 1 eine schematische Seitenansicht der wesentlichen Teile einer bevorzugten Ausführungsform eines Ultraschall-Wegmessers gemäß der Erfindung ;

Fig. 2 einen vergrößerten Teilquerschnitt durch eine Halterung für das magnetostriktive Rohr des Ultraschall-Wegmessers gemäß Fig. 1 und

Fig. 3a und Fig. 3b schematische Darstellungen zur Erläuterung der physikalischen Grundlagen des Ultraschall-Wegmessers gemäß Fig. 1 und 2.

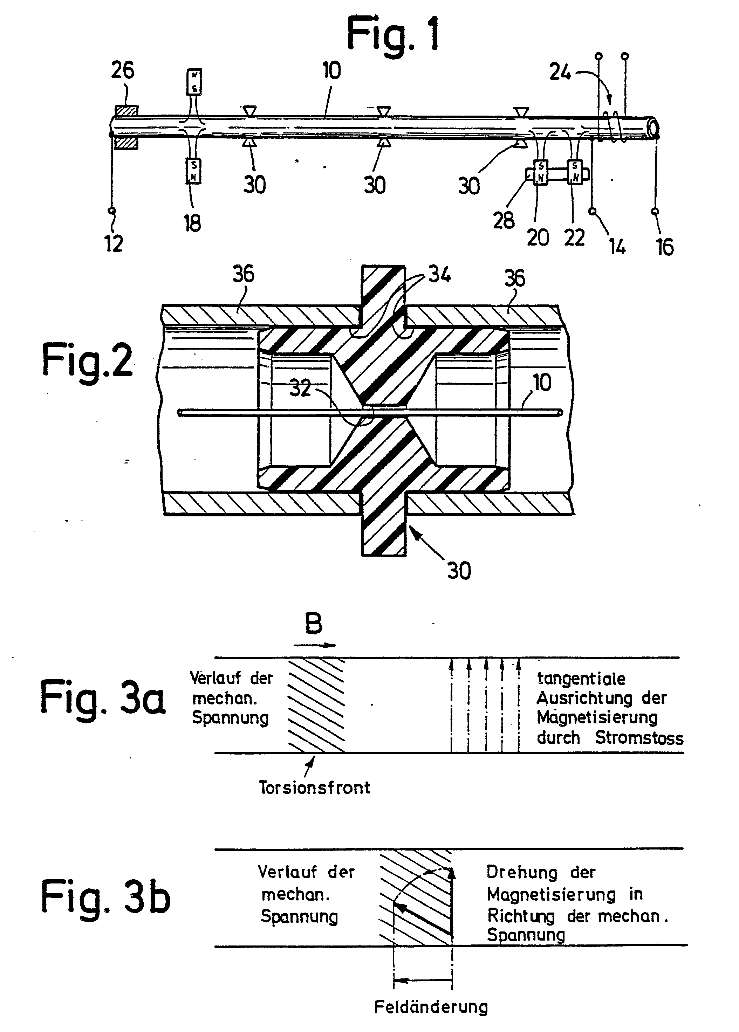

Im einzelnen zeigt Fig. 1 ein magneto-striktives Rohr 10 mit drei elektrischen Anschlüssen 12, 14, 16, die direkt, z. B. über Löt- oder Schweißverbindungen dämpfungsarm, elektrisch leitend mit dem Rohr 10 verbunden sind. Ein erstes Teilstück des Rohres 10 zwischen den Anschlüssen 14 und 16 ist von einer Spule 24 umgeben. Längs eines zweiten Teilstücks des Rohres 10, welches zwischen den Anschlüssen 12 und 14 liegt, sind ferner ein Positionsmagnet 18 und zwei Referenzmagnete 20, 22 angeordnet.

Ferner ist das an den Anschluß 12 angrenzende Ende des Rohres 10 von einer nur schematisch angedeuteten Dämpfungsvorrichtung 26 umgeben, die beispielsweise aus mehreren Gummischeiben unterschiedlicher Härte bestehen kann. Schließlich zeigt Fig. 1 eine Quarzplatte 28, auf der die beiden Referenzmagneten 20, 22 in einem fest vorgegebenen Abstand voneinander befestigt sind.

Beim Arbeiten mit dem Ultraschall-Wegmesser gemäß Fig. 1 wird zunächst ein Stromimpuls erzeugt, welcher zwischen den Anschlüssen 14 und 16 an dem gleichzeitig als elektrischer Leiter dienenden, von der Spule 24 umgebenen ersten Teilstück des Rohres 10 eine remanente zirkulare Magnetisierung erzeugt. Anschließend wird mit Hilfe eines Impulsgenerators ein elektrischer Impuls erzeugt, der zwischen den Anschlüssen 12 und 14 an dem ebenfalls als elektrischer Leiter dienenden zweiten Teilstück des Rohres 10 entlangläuft. Dieser elektrische Impuls löst am Positionsmagnet 18 und an jedem der beiden Referenzmagneten 20, 22 jeweils einen Ultraschall-Impuls aus. Die Ultraschall-Impulse führen aufgrund der eingangs erläuterten physikalischen Zusammenhänge zu entsprechenden elektrischen Signalen zwischen den Anschlüssen der Spule 24. Dabei ist es in Ausgestaltung der Erfindung besonders vorteilhaft, wenn die Länge des Rohres 10 auf der von den Magneten 18, 20, 22 abgewandten Seite der Spule 24 so gewählt wird, daß sich an das halbwellenförmige elektrische Signal, welches durch einen Ultraschall-Impuls hervorgerufen wird und eine erste Polarität aufweist, sofort ein halbwellenförmiges Signal entgegengesetzter Polarität anschließt, welches durch die Reflexion des betreffenden Ultraschall-Impulses am Rohrende und durch das Zurücklaufen dieses Ultraschall-Impulses durch die Spule 24 hervorgerufen wird. Bei dieser Ausgestaltung kann nämlich mit den Anschlüssen der Spule 24 ein Null-Durchgangsdetektor verbunden werden, mit dessen Hilfe dann eine besonders exakte Laufzeitmessung für die Ultraschall-Impulse ermöglicht wird. Im übrigen kann die Signalauswertung bei dem Ultraschall-Wegmesser gemäß Fig. 1 in derselben Weise erfolgen, wie dies in der eingangs erwähnten, früheren Anmeldung (P 33 04 520.8) beschrieben ist.

Bezüglich der speziellen Funktion des erfindungsgemäßen Ultraschall-Aufnehmers mit der das Rohr 10 axial umgebenden Spule wird jedoch ergänzend auf Fig. 3a und Fig. 3b verwiesen, wo anschaulich verdeutlicht ist, daß das Hineinlaufen der Torsionsfront eines Ultraschall-Impulses in den tangential bzw. zirkular magnetisierten Bereich des magneto-striktiven Rohres 10, der von der Spule 24 umgeben ist (Fig. 3a), gemäß Fig. 3b zu einer Feldänderung führt, aufgrund welcher eine elektrische Spannung in die Spule 24 induziert wird. Dabei ist die Laufrichtung der Torsionsfront bzw. des Ultraschallimpulses in Fig. 3a durch einen Pfeil B angedeutet. Anhand von Fig. 3a und 3b kann man sich ferner klarmachen, daß bei einer Reflexion der Torsionsfront hinter dem Bereich mit tangentialer Ausrichtung der Magnetisierung, die durch einen Stromstoß zwischen den Anschlüssen 14 und 16 bewirkt wurde, der Verlauf der mechanischen Spannung in der Torsionsfront derart um 180° gedreht ist, daß der zurücklaufende Ultraschallimpuls bzw. das Echo des Ultraschallimpulses eine Feldänderung in die entgegengesetzte Richtung hervorruft und folglich ein elektrisches Signal in der Spule 24 zur Folge hat, dessen Polarität zur Polarität des zuerst in der Spule 24 erzeugten Signals entgegengesetzt ist. Es ist daher, wie oben erwähnt, bei geeigneter Bemessung der Rohrlänge hinter der Spule 24 möglich, aufgrund eines Ultraschall-Impulses und seines Echos zwei halbwellenförmige elektrische Signale entgegengesetzter Polarität zu erhalten und den Null-Durchgang zwischen den Signalen zu erfassen, wodurch sich außerordentlich präzise Laufzeitmessungen durchführen lassen, da der Null-Durchgang durch Verzerrungen und Amplitudenänderungen der Halbwellen praktisch nicht beeinflusst wird.

Hinsichtlich des mechanischen Aufbaus des erfindungsgemäßen Ultraschall-Wegmessers hat sich die Konstruktion gemäß Fig. 2 bewährt. Aus dieser Figur wird deutlich, daß das magneto-striktive Rohr 10 in geeigneten Abständen mit Hilfe von Stützringen 30 abgestützt werden kann, die eine relativ enge Mittelöffnung 32 aufweisen, die von dem Rohr 10 mit geringem Spiel durchgriffen wird und die gleichzeitig ringförmige Schultern 34 definieren, die der Abstützung von Teilstücken 36 eines Schutzrohres dienen, welches das magneto-striktive Rohr 10 umgibt. Die Stützringe 30 und die Teilstücke 36 des Schutzrohrs können beispielsweise aus einem geeigneten Kunststoff bestehen. In Fig. 1 sind die Stützringe 30 lediglich schematisch als Auflager für das Rohr 10 angedeutet.

Damit jede Störung der Ausbreitung der Ultraschallimpulse längs des magneto-striktiven Rohres 10, insbesondere die Entstehung von unerwünschten Echos, im Bereich der Anschlußpunkte der elektrischen Anschlüsse 12, 14, 16 vermieden wird, verwendet man erfindungsgemäß für diese elektrischen Anschlüsse sehr feine und leichte Drähte, die vorzugsweise durch Punktschweißen an dem magneto-striktiven Rohr 10 befestigt werden. Es hat sich nämlich gezeigt, daß bei der Verwendung von dünnen Anschlußdrähten, die durch Punktschweißen oder Laserschweißen an dem Rohr 10 befestigt werden, keine Störung der Ausbreitung der Ultraschallimpulse längs des Rohres eintritt, während die Punktschweißverbindung andererseits auch im Dauerbetrieb zuverlässig hält, so daß jederzeit ein störungsfreier und widerstandsarmer Übergang der elektrischen Signale auf das magneto-striktive Rohr 10 gewährleistet ist.

**Patentansprüche**

1. Ultraschall-Wegmesser zur linearen Wegmessung mit einem Rohr (10) aus magneto-striktivem Material, mit einem bezüglich des Rohres beweglichen Magneten (18) zur Erzeugung von als Positionssignale dienenden Ultraschall-Torsionsimpulsen in Abhängigkeit von längs des Rohres entlanglaufenden elektrischen Impulsen aus einem Impulsgenerator und mit einem an das Rohr angekoppelten Ultraschall-Aufnehmer (24) zum Umsetzen von in dem Rohr erzeugten Ultraschallimpulsen in elektrische Signale und mit einer Meßschaltung zur Ermittlung der Position des beweglichen Magneten (18) in Abhängigkeit vom zeitlichen Abstand zwischen den aus den Positionssignalen erhaltenen Signalen und jeweils mindestens einem in Abhängigkeit vom Auftreten eines elektrischen Impulses erzeugten Bezugssignal, dadurch gekennzeichnet, daß als Ultraschall-Aufnehmer zum direkten Nachweis von Torsionsimpulsen ein aufgrund von Remanenzerscheinungen zirkular magnetisiertes Teilstück des Rohres (10) und eine dieses in axialer Richtung umgebende Spule (24) vorgesehen sind.

2. Ultraschall-Wegmesser nach Anspruch 1, dadurch gekennzeichnet, daß Vormagnetisierungseinrichtungen vorgesehen sind, mit deren Hilfe in dem von der Spule (24) umgebenen ersten Teilstück des Rohres (10) vor jeder Messung mit Hilfe eines längs dieses Teilstücks entlanglaufenden Stromimpulses eine zirkulare Magnetisierung erzeugbar ist, und daß die Anschlüsse (12, 14) für den Impulsgenerator derart angeordnet sind, daß längs eines zweiten, gegenüber dem ersten Teilstück versetzten Teilstücks des Rohres (10) entlanglaufende elektrische Impulse erzeugbar sind.

3. Ultraschall-Wegmesser nach Anspruch 1 oder 2, dadurch gekennzeichnet, daß die Länge des Rohres (10) auf der von dem beweglichen Magneten (18) abgewandten Seite der Spule (24) derart bemessen ist, daß die durch einen Ultraschall-Impuls und dessen Echo vom Rohrende hervorgerufenen halbwellenförmigen elektrischen Signale in der Spule (24) unmittelbar aufeinanderfolgen und einen Nulldurchgang definieren.

4. Ultraschall-Wegmesser nach einem der Ansprüche 1 oder 2 bis 3, dadurch gekennzeichnet, daß zur Erzeugung der Bezugssignale mindestens ein Referenz-Magnet (20, 22) vorgesehen ist.

5. Ultraschall-Wegmesser nach Anspruch 4, dadurch gekennzeichnet, daß zwei Referenz-Magnete (20, 22) vorgesehen sind, die im Abstand voneinander fest mit einem einen geringen Wärmedehnungskoeffizienten aufweisenden Verbindungselement (28) verbunden sind.

6. Ultraschall-Wegmesser nach einem der Ansprüche 1 oder 2 bis 5, dadurch gekennzeichnet, daß das Rohr (10) in vorgegebenen Abständen mittels eine Mittelöffnung (32) für das Rohr aufweisenden Stützringen (30) dämpfungsarm abgestützt ist, welche Schultern (34) zur Abstützung von Teilstücken (36) eines das Rohr (10) aus magneto-striktivem Material umgebenden Schutzrohres aufweisen.

7. Ultraschall-Wegmesser nach einem der Ansprüche 1 oder 2 bis 6, dadurch gekennzeichnet, daß das magneto-striktive Rohr (10) selbst als Leiter für elektrische Signale vorgesehen ist und daß die elektrischen Anschlüsse (12, 14, 16) für das magneto-striktive Rohr (10) als dünne elektrische Leiter mit geringer Masse ausgebildet sind.

8. Ultraschall-Wegmesser nach Anspruch 7, dadurch gekennzeichnet, daß die elektrischen Leiter durch Punktschweißen mit der Mantelfläche des magneto-striktiven Rohres (10) verbunden sind.

9. Ultraschall-Wegmesser nach Anspruch 7, dadurch gekennzeichnet, daß die elektrischen Leiter durch Laserschweißen mit der Mantelfläche des magneto-striktiven Rohres (10) verbunden sind.

**Claims**

1. An ultrasonic position measuring device for linear position measuring having a tube (10) made of magnetostrictive material, a magnet (18) which is movable relative to the tube for producing ultrasonic torsion pulses which act as position signals, as a function of electrical pulses running along the tube from a pulse generator, and having an ultrasonic receiver (24) which is coupled to the tube for converting ultrasonic pulses produced in the tube into electrical signals and having a measuring circuit for determining the position of the movable magnet (18) as a function of the time delay between the signals received from the position signals and in each case at least one reference signal which is produced as a function of the occurence of an electrical pulse, characterised in that a partial section of the tube (10) which is circularly magnetised as a result of remanence and a coil (24) which surrounds the partial section axially are provided as the ultrasonic receiver for directly detecting torsion pulses.

2. An ultrasonic position measuring device according to claim 1, characterised in that premagnetisation devices are provided, by means of which, in the first partial section of the tube (10) which is enclosed by the coil (24), a circular magnetisation is produced prior to each measurement with the aid of a current pulse running along said partial section, and the connections (12, 14) for the pulse generator are arranged such that electrical pulses can be produced running along a second partial section which is offset relative to the first partial section of the tube (10).

3. An ultrasonic position measuring device according to claim 1 or 2, characterised in that on the side of the coil (24) facing away from the movable magnet (18), the length of the tube (10) is proportioned such that the half-wave shaped electrical signals in the coil (24) generated from the end of the tube by an ultrasonic pulse and the echo thereof are in direct succession and define a zero passage.

4. An ultrasonic position measuring device according to any one of claims 1 to 3, characterised in that at least one reference magnet (20, 22) is provided for producing the reference signals.

5. An ultrasonic position measuring device according to claim 4, characterised in that two reference magnets (20, 22) are provided, which, spaced apart, are securely connected with a connecting element (28) which has a low coefficient of thermal expansion.

6. An ultrasonic position measuring device according to any one of claims 1 to 5, characterised in that the tube (10) is supported in a damping manner at predetermined intervals by means of support rings (30) comprising a central opening (32) for the tube and shoulders (34) for supporting partial sections (36) of a protective tubing surrounding the tube (10) made of magnetostrictive material.

7. An ultrasonic position measuring device according to any one of claims 1 to 6, characterised in that the magnetostrictive tube (10) per se is provided as a conductor for electrical signals and the electrical connections (12, 14, 16) for the magnetostrictive tube (10) are formed as thin electrical conductors of low mass.

8. An ultrasonic position measuring device according to claim 7, characterised in that the electrical conductors are connected by spot welding to the surface of the magnetostrictive tube (10).

9. An ultrasonic position measuring device according to claim 7, characterised in that the electrical conductors are connected by laser welding to the surface of the magnetostrictive tube (10).

## Revendications

1. Capteur de déplacement à ultra-sons destiné à la mesure linéaire de déplacements qui comporte un tube (10) en matière magnéto-strictive, un aimant (18) mobile par rapport au tube, pour la production d'impulsions de torsion à ultra-sons, servant de signaux de position, en fonction d'impulsions électriques émises par un générateur d'impulsions qui se propagent le long du tube, un capteur d'ultra-sons (24) accouplé au tube, pour la conversion des impulsions à ultra-sons produites dans le tube en signaux électriques, et un montage de mesure pour déterminer la position de l'aimant mobile (18) en fonction du laps de temps écoulé entre les signaux reçus depuis les signaux de position et, au moins un signal de référence produit respectivement en fonction de l'apparition d'une impulsion électrique, caractérisé en ce qu'il est prévu comme capteur d'ultra-sons pour la détection directe d'impulsions de torsion, une partie du tube (10) magnétisé circulairement par suite de phénomènes de rémanence et une bobine (24) entourant celle-ci en direction axiale.

2. Capteur de déplacement à ultra-sons selon la revendication 1, caractérisé en ce qu'il est prévu des dispositifs de prémagnétisation, à l'aide desquels il est possible de produire avant chaque mesure dans la première partie du tube (10) entourée par la bobine (24), en utilisant une impulsion de courant qui se propage le long de cette partie, une magnétisation circulaire, et en ce que les connexions (12, 14) pour le générateur d'impulsions sont disposées de telle sorte qu'il est possible de produire des impulsions qui se propagent le long d'une deuxième partie du tube (10) décalée par rapport à la première partie.

3. Capteur de déplacement à ultra-sons selon la revendication 1 ou 2, caractérisé en ce que la longueur du tube (10) est, sur le côté de la bobine (24) opposé à l'aimant mobile (18) dimensionnée de telle sorte que les signaux électriques en forme de demi-ondes provoquées par une impulsion d'ultra-sons et par son écho réfléchi par l'extrémité du tube se succèdent immédiatement dans la bobine et définissent un passage par zéro.

4. Capteur de déplacement à ultra-sons selon une des revendications 1 ou 2 à 3, caractérisé en ce qu'il est prévu au moins un aimant de référence (20, 22) pour la production de signaux de référence.

5. Capteur de déplacement à ultra-sons selon la revendication 4, caractérisé en ce qu'il est prévu deux aimants de référence (20, 22) qui sont placés à distance fixe l'un de l'autre et sont reliés par un élément de jonction (28) présentant un faible coefficient de dilatation thermique.

6. Capteur de déplacement à ultra-sons selon une des revendications 1 ou 2 à 5, caractérisé en ce que le tube (10) est étayé à intervalles déterminés et avec un faible amortissement par des bagues d'appui (30) qui présentent une ouverture centrale (32) pour le passage du tube et qui comportent des épaulements (34) destinés à l'appui d'éléments (36) d'un tube de protection entourant le tube (10) en matière magnéto-strictive.

7. Capteur de déplacement à ultra-sons selon une des revendications 1 ou 2 à 6, caractérisé en ce que le tube magnéto-strictif (10) est prévu lui-même comme conducteur pour des signaux électriques et en ce que les connexions électriques (12, 14, 16) du tube magnéto-strictif (10) sont constituées par des conducteurs électriques minces de faible masse.

8. Capteur de déplacement selon la revendication 7, caractérisé en ce que les conducteurs électriques sont reliés à la surface latérale du tube magnéto-strictif (10), par des soudures par points.

9. Capteur de déplacement à ultra-sons selon la revendication 7, caractérisé en ce que les conducteurs électriques sont reliés à la surface latérale du tube magnéto-strictif (10) par des soudures au laser.

# Fig. 1

# Fig.2

# Fig. 3a

Verlauf der mechan. Spannung

Torsionsfront

tangentiale Ausrichtung der Magnetisierung durch Stromstoss

# Fig. 3b

Verlauf der mechan. Spannung

Drehung der Magnetisierung in Richtung der mechan. Spannung

Feldänderung